(19) Europäisches Patentamt
European Patent Office
Office européen des brevets

(11) Veröffentlichungsnummer: **0 378 863 B1**

(12) **EUROPÄISCHE PATENTSCHRIFT**

(45) Veröffentlichungstag der Patentschrift: **16.02.94**

(51) Int. Cl.[5]: **C08F 20/28**, C08L 57/00

(21) Anmeldenummer: **89124178.8**

(22) Anmeldetag: **30.12.89**

# (54) Oxetanylgruppen enthaltende thermoplastische Formmassen.

(30) Priorität: **14.01.89 DE 3901030**

(43) Veröffentlichungstag der Anmeldung:
**25.07.90 Patentblatt 90/30**

(45) Bekanntmachung des Hinweises auf die Patenterteilung:
**16.02.94 Patentblatt 94/07**

(84) Benannte Vertragsstaaten:
**DE ES FR GB IT NL**

(56) Entgegenhaltungen:
**US-A- 3 105 838**
**US-A- 3 417 102**

(73) Patentinhaber: **BAYER AG**
**D-51368 Leverkusen(DE)**

(72) Erfinder: **Piejko, Karl-Erwin, Dr.**
**Unterscheider Weg 7A**
**D-5060 Bergisch Gladbach 2(DE)**
Erfinder: **Fengler, Gerd, Dr.**
**Bethelstrasse 16**
**D-4150 Krefeld(DE)**
Erfinder: **Lütjens, Holger, Dr.**
**Rybniker Strasse 12**
**D-5000 Köln 80(DE)**
Erfinder: **Braese, Hans-Eberhard**
**Käthe-Kollwitz-Strasse 3**
**D-5000 Köln 71(DE)**
Erfinder: **Lindner, Christian, Dr.**
**Im Wasserblech 11**
**D-5000 Köln 91(DE)**
Erfinder: **Kirsch, Jürgen, Dr.**
**Hahnenweg 1**
**D-5000 Köln 80(DE)**

**EP 0 378 863 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Oxetanylgruppen enthaltende thermoplastische (harzartige) Formmassen.

Thermoplastische Formmassen, die harzartige Polymerisate z.B. Styrol-Acrylnitril-Copolymerisate oder Methylmethacrylat-Polymerisate neben anderen Thermoplasten wie Polyvinylchlorid oder Pfropfpolymerisaten (z.B. ABS, MBS oder ASA) enthalten, werden in großem Umfang zur Herstellung von Formkörpern wie Gehäusen von Elektrogeräten, Profilen und Rohren durch Spritzguß oder Extrusion verwendet. Dabei kann bereits bei der Herstellung der Formkörper durch die hohen Verarbeitungstemperaturen die Formmasse geschädigt werden. Dies ist z.B. an Verfärbungen erkennbar und auch durch Stabilisatoren nicht ganz zu verhindern. Auch bei manchen Anwendungen der Formteile beispielsweise als Gehäuse von Haushaltsgeräten können lokale Überhitzungen Verfärbungen verursachen. Es besteht deshalb ein Bedarf für Werkstoffe, die eine erhöhte Thermostabilität besitzen und Formkörper mit verbesserten mechanischen Eigenschaften, insbesondere auch nach längerem Gebrauch herzustellen gestatten.

Gegenstand der Erfindung sind thermoplastische Formmassen aus

1. einem harzartigen Copolymerisat aus 1 bis 50 Gew.-% Monomeren entsprechend der Formel (I)

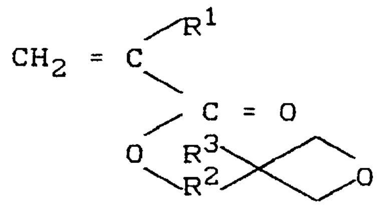

(I)

worin

$R^1$ = H, $CH_3$.
$R^2$ = $C_1$-$C_8$-Alkylen,
$R^3$ = $C_1$-$C_4$-Alkyl

und Vinylmonomeren aus der Gruppe Styrol, α-Methylstyrol, Acrylnitril, Methacrylnitril, Acrylaten, Methacrylaten, Vinylchlorid, Vinylidenchlorid und Mischungen daraus und

2. einem thermoplastischen Polymer aus der Gruppe Polystyrol, Polymethylmethacrylat, Polyvinylchlorid, Styrol/Acrylnitrilcopolymer, α-Methylstyrol/Acrylnitril-Copolymer, α-Methylstyrol/Acrylnitril/Methylmethacrylat-Copolymer, Pfropfpolymer von Vinylmonomeren auf eine Kautschukbasis, Naturkautschuk, Olefinkautschuk, Ethylenvinylacetat-Copolymer, Acrylatkautschuk und Dien/Styrol-Blockpolymere sowie deren Hydrierungsprodukte.

"Harzartig" bedeutet im vorliegenden Zusammenhang, daß die Polymerisate unvernetzt sind, Erweichungstemperaturen von oberhalb 30°, insbesondere oberhalb 50°C haben, und thermoplastisch verarbeitbar sind.

Monomere, die zur Herstellung der harzartigen Copolymerisate (1) und der thermoplastischen Polymeren (2) dienen, sind u.A.

A1) Styrol, α-Methylstyrol, Acrylnitril, Methacrylnitril, Carbonsäure-$C_1$-$C_4$-vinylestern, Acrylsäureestern, Methacrylsäureestern, Maleinsäurederivaten, Vinylchlorid, Vinylidenchlorid.

Besonders bevorzugte Monomere der Formel (I) sind solche, in denen

$R^1$ = H, $CH_3$,
$R^2$ = $-CH_2-$,
$R^3$ = $CH_3$, $C_2H_5$.

Beispiele für erfindungsgemäße harzartige Copolymerisate (1) sind solche aus Styrol und Monomeren der Formel (I), aus Methylmethacrylat und (I), ferner Terpolymerisate aus Styrol, Acrylnitril und (I), aus Styrol, Methylmethacrylat und (I), aus α-Methylstyrol, Acrylnitril und (I) sowie Quaterpolymerisate aus α-Methylstyrol, Methylmethacrylat, Acrylnitril und (I).

Die harzartigen Copolymerisate (1) enthalten bevorzugt polymerisierte Monomere der Formel (I) in Mengen bis zu 50 Gew.-%, insbesondere bis zu 35 Gew.-%, besonders bevorzugte Mengen sind 1 bis 20 Gew.-%, insbesondere 2 bis 15 Gew.-% (jeweils bezogen auf das ganze Polymerisat).

Sie können nach bekannten Verfahren der Copolymerisation bevorzugt in organischen Lösungsmitteln oder in wäßriger Suspension oder Emulsion durch radikalische oder thermische Polymerisation aus den Monomeren hergestellt werden (vgl. DE-AS 2 724 360). Das angewendete Polymerisationsverfahren muß sicherstellen, daß die Oxetanylgruppen wenigstens zum Teil erhalten bleiben (beispielsweise muß man bei

der Emulsionspolymerisation stark saures (pH <1) und stark alkalisches (pH >12) Milieu in Kombination mit höheren Temperaturen vermeiden). Oxetanylgruppen enthaltende Copolymerisate, die in schwach alkalischem Milieu in wäßriger Dispersion erzeugt worden sind, sind besonders geeignet.

Das Molekulargewicht der harzartigen Copolymerisate (1) kann - wie üblich - beeinflußt werden durch Polymerisationstemperatur, Monomerenkonzentration, Katalysatormenge und durch Molekulargewichtsregler. Dies sind bevorzugt Organoschwefelverbindungen, z.B. Mercaptane oder Disulfide, insbesondere langkettige Mercaptane wie n- und tert.-Dodecylmercaptane. Die Regler werden normalerweise im Monomerengemisch gelöst.

Die Molekulargewichte $\overline{M}w$ (Gewichtsmittel) der harzartigen Copolymerisate (1) sind bevorzugt 3000 bis 800 000 g/Mol, besonders bevorzugt 10 000 bis 500 000 g/Mol (ermittel durch Lichtstreuung oder Sedimentation).

Die zur Herstellung der harzartigen Copolymerisate (1) dienenden Monomere, auch die der Formel (I), sind bekannt. Aus der japanischen Patentanmeldung 7 344 676 ist zusätzlich bekannt bestimmte Oxethanylgruppen enthaltende Monomere - genannt ist 3-ethyl-3-methacryloyloxymethyl-oxethan mit bestimmten weiteren Monomeren zu polymerisieren. Durch die Anwesenheit ungesättigter Säuren sind diese Produkte vernetzend.

Das die zweite Komponente der Formmasse bildende thermoplastische Polymer (2) ist u.A.: Polystyrol, Polymethylmethacrylat, Polyvinylchlorid, Styrol-Acrylnitril-Copolymerisate; α-Methylstyrol-Acrylnitril-Copolymerisate und α-Methylstyrol-Acrylnitril-Methylmethacrylat-Copolymerisate oder ein Pfropfpolymerisat von Vinylmonomeren auf eine Kautschukgrundlage. Besonders geeignete Kautschukgrundlagen sind Dienkautschuke, Alkylacrylatkautschuke, Olefinkautschuke und Siliconkautschuke. Die in ihrer Anwesenheit polymerisierten Pfropfmonomere sind wieder bevorzugt die Vinylmonomere A1). Bevorzugte Pfropfpolymerisate sind wenigstens teilweise vernetzt und besitzen eine teilchenförmige Struktur mit mittleren Teilchendurchmessern von 0,1 bis 3 µm, bevorzugt 0,1 bis 1 µm. Komponente 2) sind auch Naturkautschuk, Olefinkautschuke wie EPDM, Ethylenvinylacetat-Copolymere, Acrylatkautschuk, Dien/Styrol-Blockcopolymerisate sowie deren Hydrierungsprodukte.

Besonders bevorzugte Formmassen bestehen aus einem

1. oxetanhaltigen Styrol- oder α-Methylstyrolcopolymerharz und
2. einem thermoplastischen, oxetanfreien Pfropfpolymerisat (insbesondere von Styrol-Acrylnitrilgemischen auf Dien- oder Acrylatkautschuk).

Ganz besonders bevorzugte Formmassen im Sinne der Erfindung bestehen aus einem erfindungsgemäßen Copolymerisat mit Oxetanylgruppen, Polyvinylchlorid, einem ABS- oder MBS-Pfropfpolymerisat und gegebenenfalls einem thermoplastischen Styrol- oder α-Methylstyrol-Copolymerisat.

Die Massen können die üblichen Zusatzstoffe, wie Gleit- und Entformungsmittel, Nucleierungsmittel, Stabilisatoren, Füll-, Verstärkerstoffe, Flammschutzmittel, Farbstoffe sowie Thermostabilisatoren, Antioxidantien und/oder Lichtschutzmittel enthalten. Diese Additive werden in den üblichen Mengen, im allgemeinen bis zu 30 Gew.-%, gelegentlich allerdings auch bis zu 60 Gew.-% (insbesondere bei Füllstoffen), verwendet, Die Formmassen können durch Vermischen der Komponenten in üblicher Weise erhalten werden. Besonders geeignete Füllstoffe sind Glasfasern, da glasfaserhaltige erfindungsgemäße Formmassen vorteilhafte Oberflächeneigenschaften nach thermoplastischer Verarbeitung aufweisen.

Die Formmassen sind geeignet zur Herstellung von Formkörpern oder Formteilen jeder Art. Sie besitzen im allgemeinen größere Stabilität gegenüber Alterung durch Umwelteinflüsse, Chemikalien, Temperaturbelastung und Schmelzflußscherung während der thermoplastischen Verarbeitung und Formgebung. Die verbesserte Stabilität zeigt sich auch in verbesserten Eigenschaften wie Farbe, kürzerer Verarbeitungszyklus, Langzeitstabilität bei Gebrauch, geringer Gehalt an Verunreinigungen und Nebenprodukten, besserer Glanz, bessere mechanische Eigenschaften.

Beispiele

Die erfindungsgemäßen Oxetanylgruppen enthaltenden Polymerisate werden durch Copolymerisation des Monomers der Formel (Ia) erhalten.

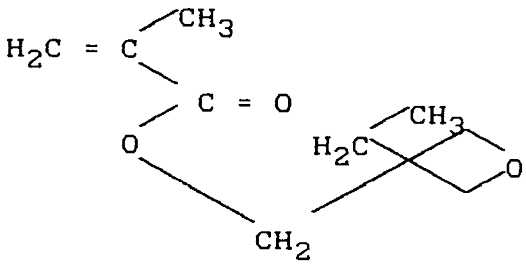

(Ia)

Die Mengenangaben in den Beispielen sind, wenn nicht anders angegeben, in Gew.-%. Die Molmassen der Polymerisate werden charakterisiert durch den L-Wert:

L-Wert = ($\eta_{rel}$-1)/0,005;

mit

$\eta_{rel}$ = relative Lösungsviskosität, gemessen in Dimethylformamid bei 25 °C und einer Konzentration von 0,005 g/cm$^3$

1. Bestandteile der erfindungsgemäßen und Vergleichsformmassen

1.1 Oxetanylgruppen enthaltende Polymerisate

A-1:

Terpolymerisat hergestellt durch wäßrige Emulsionspolymerisation einer Monomermischung aus $\alpha$-Methylstyrol, Acrylnitril und Verbindung Ia im Gewichtsverhältnis 63:31:6, mit dem Natriumsalz der disproportionierten Abietinsäure als Emulgator bei pH 10. Das Polymerisat wurde durch Koagulation des Polymerisatlatex mit einer wäßrigen Magnesiumsulfat-Natriumacetat-Essigsäurelösung (pH 4,2) und übliche Aufarbeitung isoliert. Das Polymerisat besitzt einen L-Wert von 60.

A-2:

Terpolymerisat hergestellt durch wäßrige Emulsionspolymerisation einer Monomermischung aus $\alpha$-Methylstyrol, Acrylnitril und Verbindung Ia im Gewichtsverhältnis 67,7:26,3:6 mit dem Natriumsalz der $C_{14}$-$C_{16}$-Alkylsulfonsäure als Emulgator bei pH 8-9, Die Emulsion wurde mit einer wäßrigen Magnesiumsulfatlösung koaguliert. Das Polymerisat besitzt einen L-Wert von 65.

A-3:

Terpolymerisat hergestellt durch wäßrige Emulsionspolymerisation einer Monomermischung aus Styrol, Acrylnitril und Verbindung Ia im Gewichtsverhältnis 60:10:30 analog A-1. Das Polymerisat besitzt einen L-Wert von 59.

A-4:

Emulsionspolymerisat der Verbindung Ia, hergestellt analog A-1 mit einem L-Wert von 55.

1.2 Vergleichspolymerisate

V-1:

Copolymerisat aus $\alpha$-Methylstyrol und Acrylnitril im Gewichtsverhältnis 59:31, hergestellt analog A-1 mit einem L-Wert von 61.

V-2:

Copolymerisat aus $\alpha$-Methylstyrol und Acrylnitril im Gewichtsverhältnis 62:28, hergestellt analog A-2 mit einem L-Wert von 65.

1.3 Weitere Komponenten

1.3.1 Polyvinylchlorid mit einem K-Wert von 70.

1.3.2 Pfropfpolymerisat aus 50 Gew.-% Polybutadien mit einem mittleren Teilchendurchmesser ($d_{50}$-Wert) von 380 nm (Pfropfgrundlage) und 50 Gew.-% einer Styrol/Acrylnitrilmischung (Gewichtsverhältnis 72/28) als Pfropfauflage (hergestellt durch Emulsionspolymerisation).

2. Herstellung und Prüfung der Formmassen

2.1 Beispiele 1 bis 4

Zur Herstellung der Formmassen werden die in Tabelle 1 aufgeführten Komponenten in den dort angegebenen Mengen auf einem Mischwalzwerk unter Zusatz von 1 Gew.-% Butylzinnmercaptid und 0,2 Gew.-% Esterwachs homogen vermischt und zu ca. 1 mm starken Folien ausgewalzt.

Die Prüfung der Formmassen erfolgt durch Lagerung im Mathisofen bei 200 °C und anschließende visuelle Beurteilung, Prüfzeiten und Ergebnisse sind in Tabelle 2 zusammengefaßt.

Die Ergebnisse aus Tabelle 2 zeigen, daß die erfindungsgemäßen Formmassen nach Wärmealterung unter den angegebenen Bedingungen nur gering verfärbt sind, während die Vergleichsformmassen

stark verfärbt sind, was auf eine partielle Zerstörung der Formmassen schließen läßt. Weiterhin zeigen die Ergebnisse aus Tabelle 2, daß die erfindungsgemäßen Formmassen erheblich länger einer Wärmealterung unterzogen werden können, bis sie entsprechende Verfärbungen wie die Vergleichsformmassen aufweisen. Diese Ergebnisse belegen die überlegene Alterungsstabilität der erfindungsgemäßen Formmassen.

Tabelle 1 Zusammensetzung erfindungsgemäßer und Vergleichsformmassen (-V) der Beispiele bis 4 (in Gew.-%)

| Beispiel Nr. | A-1 | A-2 | A-3 | A-4 | V-1 | V-2 | 1.3.1 (PVC) | 1.3.2 (ABS) |
|---|---|---|---|---|---|---|---|---|
| 1 | 40 | - | - | - | - | - | 60 | - |
| 1-V | - | - | - | - | 40 | - | 60 | - |
| 2 | 30,8 | - | - | - | - | - | 60 | 9,2 |
| 2-V | - | - | - | - | 30,8 | - | 60 | 9,2 |
| 3 | - | 40 | - | - | - | - | 60 | - |
| 3-V | - | - | - | - | - | 40 | 60 | - |
| 4.1* | - | - | 6,2 | - | - | 21,6 | 65,7 | 6,5 |
| 4.2* | - | - | - | 2,0 | - | 22,6 | 68,6 | 6,8 |
| 4-V* | - | - | - | - | - | 23,1 | 70 | 6,9 |

* Formmasse enthält zusätzlich 3 Gew.-% $TiO_2$-Pigmente

Tabelle 2 Prüfung erfindungsgemäßer und Vergleichsformmassen (-V) durch Lagerung im Mathisofen bei 200°C der Beispiele 1 bis 4 (Zusammensetzung siehe Tabelle 1)

| Beispiel Nr. | Lagerzeit im Mathisofen [min] | visuelle Beurteilung | Lagerzeit bis zum Erreichen der gleichen Verfärbungsintensität wie Vergleichsproben [min] |
|---|---|---|---|
| 1 | 20 | gelblich | >50 |
| 1-V | 20 | dunkelbraun | |
| 2 | 20 | gelblich | >50 |
| 2-V | 20 | dunkelbraun | |
| 3 | 25 | gelblich | >40 |
| 3-V | 25 | dunkelbraun | |
| 4.1 | 20 | hellbraun | 40-50 |
| 4.2 | 20 | hellbraun | 40 |
| 4-V | 20 | braun | |

2.2 Beispiel 5

Auf einer Walze werden bei 240 °C unter Zusatz von 0,5 Gew.-% Esterwachs

1. Polymerisat A-2 und
2. zum Vergleich Polymerisat V-2

gewalzt. Nach 15 Minuten wird im Falle des 1. Versuchs ein schwach verfärbtes Walzfell erhalten,

während der 2. (Vergleichs)Versuch ein braun gefärbtes Walzfell ergibt. Um eine analoge Verfärbung wie das Vergleichsprodukt zu erhalten, muß das erfindungsgemäße Polymerisat ca. 35 bis 40 Minuten bei 240 °C gewalzt werden.

Die geringere Verfärbung des Polymerisats A-2 im Vergleich zu V-2 läßt auf eine geringere Schädigung bei Wärmealterung und damit auf eine erhöhte Alterungsstabilität schließen.

## Patentansprüche

Thermoplastische Formmasse aus

**1.** einem harzartigen Copolymerisat aus 1 bis 50 Gew.-% Monomeren entsprechend der Formel (I)

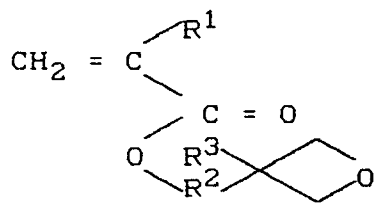

(I)

worin

$R^1$ = H, $CH_3$,
$R^2$ = $C_1$-$C_8$-Alkylen,
$R^3$ = $C_1$-$C_4$-Alkyl

und Vinylmonomeren aus der Gruppe Styrol, α-Methylstyrol, Acrylnitril, Methacrylnitril, Acrylaten, Methacrylaten, Vinylchlorid, Vinylidenchlorid und Mischungen daraus und

**2.** einem thermoplastischen Polymer aus der Gruppe Polystyrol, Polymethylmethacrylat, Polyvinylchlorid, Styrol/Acrylnitrilcopolymer, α-Methylstyrol/Acrylnitril-Copolymer, α-Methylstyrol/Acrylnitril/Methylmethacrylat-Copolymer, Pfropfpolymer von Vinylmonomeren auf eine Kautschukbasis, Naturkautschuk, Olefinkautschuk, Ethylenvinylacetat-Copolymer, Acrylatkautschuk und Dien/Styrol-Blockpolymere sowie deren Hydrierungsprodukte.

## Claims

A thermoplastic moulding compound of

**1.** resin-like copolymer of 1 to 50% by weight monomers corresponding to formula (I)

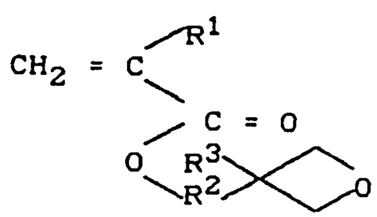

(I)

in which

$R^1$ = H, $CH_3$,
$R^2$ = $C_{1-8}$ alkylene,
$R^3$ = $C_{1-4}$ alkyl

and vinyl monomers from the group consisting of styrene, α-methyl styrene, acrylonitrile, methacrylonitrile, acrylates, methacrylates, vinyl chloride, vinylidene chloride and mixtures thereof and

**2.** a thermoplastic polymer from the group consisting of polystyrene, polymethyl methacrylate, polyvinyl chloride, styrene/acrylonitrile copolymer, α-methylstyrene/acrylonitrilecopolymer, α-methylstyrene/acrylonitrile/methyl methacrylate copolymer, graft polymers of vinyl monomers on a rubber base, natural rubber, olefin rubber, ethylene/vinyl acetate copolymer, acrylate rubber and diene/styrene block polymers and hydrogenation products thereof.

## Revendications

**1.** Matière moulable thermoplastique constituée de :

1. un copolymère résineux constitué de 1 à 50 % en poids de monomères répondant à la formule (I)

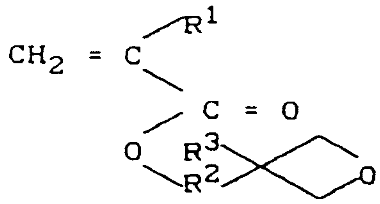

(I)

dans laquelle

$R^1$ = H, $CH_3$,

$R^2$ = groupements alkyle en $C_1$-$C_8$,

$R^3$ = groupement alkyle en $C_1$-$C_4$,

et des monomères vinyliques choisis parmi les suivants : styrène, α-méthylstyrène, acrylonitrile, méthacrylonitrile, acrylates, méthacrylates, chlorure de vinyle, chlorure de vinylidène et des mélanges de ceux-ci et

**2.** un polymère thermoplastique choisi parmi les suivants : polystyrène, polyméthacrylate de méthyle, polychlorure de vinyle, copolymère styrène/acrylonitrile, copolymère α-méthylstyrène/acrylonitrile, copolymère α-méthylstyrène/acrylonitrile/méthacrylate de méthyle, polymère greffé de monomères vinyliques sur une base de caoutchouc, caoutchouc naturel, caoutchouc d'oléfines, copolymère éthylène/acétate de vinyle, caoutchouc d'acrylates et polymères séquencés diène/styrène ainsi que leurs produits d'hydrogénation.